# EUROPEAN PATENT SPECIFICATION

(11) **EP 3 807 037 B1**
(45) Date of publication and mention of the grant of the patent: **05.11.2025**
(21) Application number: 19819152.0
(22) Date of filing: 12.06.2019
(51) Int. Cl.: B23B 51/04, B23B 51/08

(54) **HOLE SAW ASSEMBLY**
LOCHSÄGENANORDNUNG
ENSEMBLE SCIE-CLOCHE

(30) Priority: 12.06.2018 AU 2018902101
(43) Date of publication of application: 21.04.2021
(73) Proprietor: Keightley, Kym, Fairview Park, SA 5126 (AU)
(72) Inventor: Keightley, Kym, Fairview Park, SA 5126 (AU)
(74) Representative: Valet Patent Services Limited
(86) International application number: PCT/IB2019/054897
(87) International publication number: WO 2019/239336

(56) References cited:
- EP-A1- 3 006 147
- EP-A1- 3 006 147
- DE-A1- 102012 001 933
- US-A- 5 082 403
- US-A1- 2011 255 931
- US-B1- 6 705 807
- US-B2- 7 967 535

## Description

### FIELD OF THE INVENTION

The present invention generally relates to a hole saw assembly, and, more particularly, to a hole saw assembly with an ejection member used to eject a plug formed when a hole saw cuts the plug of a material.

### BACKGROUND OF THE INVENTION

Hole saws or hole cutters are generally used for making holes or enlarging existing holes in different materials such as wood, metal, plastic and concrete etc. These holes saws are generally in the form of a hollow cylinder or a tube, having a circular edge with cutting teeth at one end and a structure for attachment to a power drill or other type of drilling machine at the other end. Prior arts EP3006147 and DE102012001933 disclose related hole saw assemblies.

Typically, when a desired hole is cut with the help of cutting teeth of the hole saw, a circular cut portion (also known as a plug) of the material is formed, which gets struck within the cylindrical wall of the hole saw. Various structures and mechanisms have been devised to remove or allow easy removal of the plug formed within the hole saw. One such mechanism utilizes a plate cooperating with a spring located within the cylindrical wall of the hole saw to eject the plugs formed during the cutting process. However, dust or particles from the sawing of the hole may slow or hinder the ejection of the plug out of the hole saw. Accordingly, it is objective of the present invention to overcome above mentioned problem and provide a mechanism and a method to effectively eject the plug out of the hole saw.

### SUMMARY OF THE INVENTION

In view of the foregoing disadvantages inherent in the prior art, the general purpose of the present invention is to provide a dispensing system to include all advantages of the prior art, and to overcome the drawbacks inherent in the prior art.

In one aspect of the present invention, a hole saw assembly is provided. The hole saw assembly includes an arbor, a hole saw, a pilot drill and an ejection member. The hole saw removably coupled to the arbor. The pilot drill removably coupled to the arbor. The pilot drill coaxial with the hole saw extends through and beyond the hole saw. The ejection member configured to slide along the pilot drill. The ejection member includes a biasing member. The ejection member also includes a barrel coaxially aligned with the pilot drill. The ejection member further including a sleeve coaxially aligned with the barrel. The barrel and the sleeve are configured to engage with the lock receiving groove member to restrict the slidable movement of the barrel and the sleeve with respect to the pilot drill. The arbor includes an arbor shaft and an annulus having a plurality of apertures. The hole saw includes a boss and a hole saw cup having a plurality of cutting teeth. The boss includes a plurality of pins. The pins are configured to engage the apertures of the annulus, thereby coupling the hole saw and the arbor. The ejection member includes two locking members. The locking member is a steel ball bearing. The sleeve includes a first step, a second step and a space. The space is defined between the first step and the second step and is configured to receive at least one locking member during operation of the hole saw assembly.

In an embodiment, the barrel includes a flange extending towards the sleeve, a central through bore and at least one lock receiving hole member. The at least one locking member is fitted inside the at least one lock receiving hole member and is free to travel in the at least one lock receiving hole member. The barrel includes two lock receiving hole members positioned radially 180 degrees apart. The sleeve is configured to move between a first position and a second position. In the first position the second step abuts the at least one locking member moving it down the at least one lock receiving hole member towards the lock receiving groove member and into engagement with the lock receiving groove member of the pilot drill. In the second position the at least one locking member is free to move away from the lock receiving groove member and travel up the at least one lock receiving hole member and into the space defined by the barrel.

An ejection member is provided. The ejection member includes a barrel and a sleeve coaxial with the barrel. The sleeve includes an inner surface and an outer surface. The barrel is disposed within the inner surface. The ejection member further includes at least one locking member. The ejection member includes a biasing member provided between the barrel and the sleeve.

In another aspect of the invention, a method for removing a plug formed during cutting operation of a hole by a hole saw assembly is provided. The method includes disengaging a hole saw from an arbor. The method also includes sliding the hole saw and an ejection member along a pilot drill until the ejection member engages a lock receiving groove member of the pilot drill. The method further includes sliding the hole saw towards the mounting end of the pilot drill exposing the plug. The method includes removing the plug formed during cutting operation. The method also includes inserting a reset key into the hole saw assembly to disengage the ejection member from the lock receiving groove member of the pilot drill.

The invention is defined in the independent claims. Further advantageous and optional aspects of the invention are defined in the dependent claims. For a better understanding of the present invention, its operating advantages, and the specified object attained by its uses, reference should be made to the accompanying drawings and descriptive matter in which there are illustrated exemplary embodiments of the present invention.

### BRIEF DESCRIPTION OF THE DRAWINGS

The advantages and features of the present invention will become better understood with reference to the following detailed description and claims taken in conjunction with the accompanying drawings, wherein like elements are identified with like symbols, and in which:
FIG. 1A illustrates a perspective view of the hole saw assembly including an arbor, a hole saw, a pilot drill and an ejection member in the reset position ready to cut a hole, in accordance with an embodiment of the present invention;
FIG. 1B illustrates a longitudinal sectional view of the hole saw assembly of FIG. 1A along the line A-A', in accordance with an embodiment of the present invention;
FIG. 2A illustrates a hole saw assembly including the arbor, the hole saw, the pilot drill and the ejection member after cutting a hole, the hole saw therefore containing a plug, in accordance with an embodiment of the present invention;
FIG. 2B illustrates a longitudinal sectional view of the hole saw assembly of FIG. 2A along the line B-B', in accordance with an embodiment of the present invention;
FIG. 3A illustrates a perspective view of the hole saw assembly including the arbor, the hole saw, the pilot drill and the ejection member ejecting the plug formed during the cutting process, in accordance with an embodiment of the present invention;
FIG. 3B illustrates a longitudinal sectional view of the hole saw assembly of FIG. 3A along the line C-C', in accordance with an embodiment of the present invention;
FIG. 4A illustrates the hole saw assembly including the arbor, the hole saw, the pilot drill, the ejection member and a reset key, in accordance with an embodiment of the present invention;
FIG 4B illustrates a section view of the hole saw assembly and the reset key of FIG 4A along the line D-D', in accordance with an embodiment of the present invention;
FIG. 5A illustrates the hole saw assembly including the arbor, the hole saw, the pilot drill, the ejection member and the reset key being pushed against the sleeve, in accordance with an embodiment of the present invention;
FIG. 5B illustrates a sectional view of the hole saw assembly and the reset key of FIG. 5A along the line E-E', in accordance with an embodiment of the present invention;
FIG. 6A illustrates the pilot drill and the ejection member in a first position, in accordance with an embodiment of the present invention;
FIG. 6B illustrates cross sectional view of the ejection member and the pilot drill of FIG. 6A along the line F-F', in accordance with an embodiment of the present invention;
FIG. 7A illustrates the pilot drill and the ejection member in a second position, in accordance with an embodiment of the present invention;
FIG. 7B illustrates cross sectional view of the ejection member and the pilot drill of the FIG. 7A along the line G-G', in accordance with an embodiment of the present invention; and
FIG.8 illustrates a method of removing the plug formed during the cutting process by the hole saw assembly, in accordance with an embodiment of the present invention.

Like reference numerals refer to like parts throughout the description of several views of the drawings.

### DETAILED DESCRIPTION OF THE INVENTION

For a thorough understanding of the present invention, reference is to be made to the following detailed description, including the appended claims, in connection with the above-described drawings. Although the present invention is described in connection with exemplary embodiments, the present invention is not intended to be limited to the specific forms set forth herein. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

The terms, "a" and "an" herein do not denote a limitation of quantity, but rather denote the presence of at least one of the referenced items.

The present invention provides a hole saw assembly. The hole saw assembly includes an arbor, a hole saw, a pilot drill and an ejection member. The hole saw removably coupled to the arbor. The pilot drill removably coupled to the arbor. The pilot drill coaxial with the hole saw extends through and beyond the hole saw. The ejection member configured to slide along the pilot drill. The ejection member includes a biasing member. The ejection member also includes a barrel coaxially aligned with the pilot drill. The ejection member further including a sleeve coaxially aligned with the barrel. The barrel and the sleeve are configured to engage with the lock receiving groove member to restrict the slidable movement of the barrel and the sleeve with respect to the pilot drill.

The present invention also includes an ejection member. The ejection member includes a barrel and a sleeve coaxial with the barrel. The sleeve includes an inner surface and an outer surface. The barrel is disposed within the inner surface. The ejection member further includes at least one locking member. The ejection member includes a biasing member provided between the barrel and the sleeve.

The present invention further provides a method for removing a plug formed during cutting operation of a hole by a hole saw assembly. The method includes disengaging a hole saw from an arbor. The method also includes sliding the hole saw and an ejection member along a pilot drill until the ejection member engages a lock receiving groove member of the pilot drill. The method further includes sliding the hole saw towards the mounting end of the pilot drill exposing the plug. The method includes removing the plug formed during cutting operation. The method also includes inserting a reset key into the hole saw assembly to disengage the ejection member from the lock receiving groove member of the pilot drill.

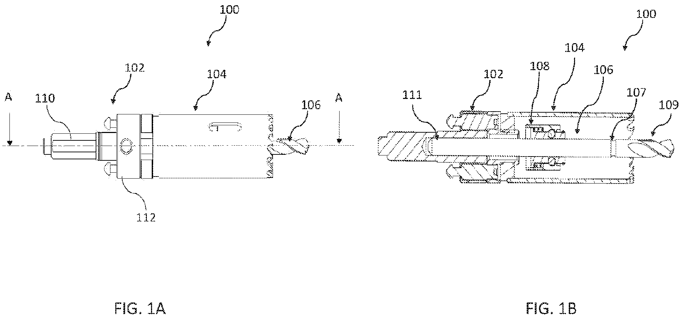

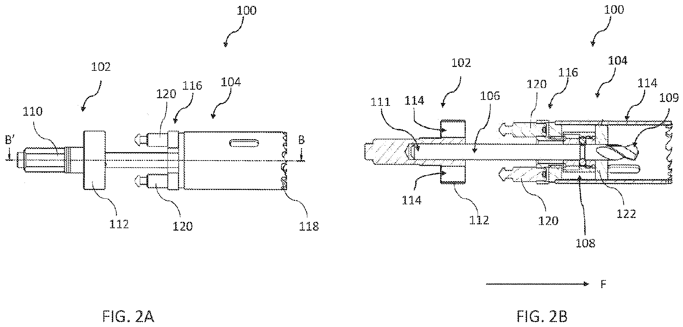

Referring to Figures 1A, 1B, 2A and 2B, a hole saw assembly 100 is illustrated. The hole saw assembly 100 includes an arbor 102, a hole saw 104, a pilot drill 106, and an ejection member 108. The arbor 102 (herein after alternatively referred to as mandrel 102) assures reliable engagement of the hole saw assembly 100 with a chuck of a drill used to drive it. The arbor 102 includes an arbor shaft 110 (also known as shank) and an annulus 112 (also known as a collar). The arbor shaft 110 is hexagonal in shape and is adapted to engage with the chuck of a power or a hand drill. The annulus 112 includes plurality of apertures 114, as seen in FIG. 2B. In the illustrated example, the annulus 112 includes two apertures 114. The pilot drill 106 is removably coupled to the arbor 102. In one arrangement, the pilot drill 106 is seated in a hole in an end of the annulus 112 of the arbor 102. The pilot drill 106 extends in diametrically opposite direction with respect to the arbor shaft 110. The pilot drill 106 includes a cutting face 109, a mounting end 111 and a lock receiving groove member 107. The cutting face 109 is disposed opposite to the mounting end 111. The mounting end 111 of the pilot drill 106 is seated in the hole in the annulus 112 of the arbor 102. The pilot drill 106 coaxial with the hole saw 104 extends through and beyond the hole saw 104 such that, during the cutting operation, the cutting face 109 of the pilot drill 102 is the first part to the engage a surface (not shown) of the material (not shown) such as concrete, wood, etc. to be bored. The lock receiving groove member 107 is a circumferential groove around the pilot drill 106. The lock receiving groove member 107 is disposed near to the cutting face 109.

The hole saw 104 includes a hole saw cup 114 and a boss 116. The hole saw cup 114 is removably coupled to the boss 116. The hole saw cup 114 is cylindrical shaped member. The hole saw cup 114 includes a plurality of cutting teeth 118 disposed on an end opposite to an end which couples with the boss 116. The boss 116 includes a plurality of pins 120. The plurality of pins 120 are configured to engage and disengage with the plurality of apertures 114 provided on the annulus 112, thereby coupling and decoupling the boss 116 and the arbor 102 respectively. Further, the plurality of pins 120 prevent the hole saw 104 from rotating with respect to the arbor 102 when the hole saw assembly 100 is being used to cut a hole in the material. During operation the cutting teeth 118 of the hole saw cup 114 is the second part to engage the surface of the material to be bored.

During operation of the hole saw assembly 100, a hole (not shown) is bored from the surface of the material to be bored, this generates a plug 122 (hereinafter alternatively referred to as circular cut portion 122), which usually gets nested or struck within the hole saw cup 114 of the hole saw 104. The hole saw assembly 100 includes the ejection member 108 to remove the plug 122 nested or struck within the hole saw cup 114. The ejection member 108 is configured to slide along the pilot drill 106. The pilot drill 106, the hole saw 104, the arbor 102 and the ejection member 108 are coaxially aligned along a central axis X-X' (shown in FIG. 1B) of the hole saw assembly 100.

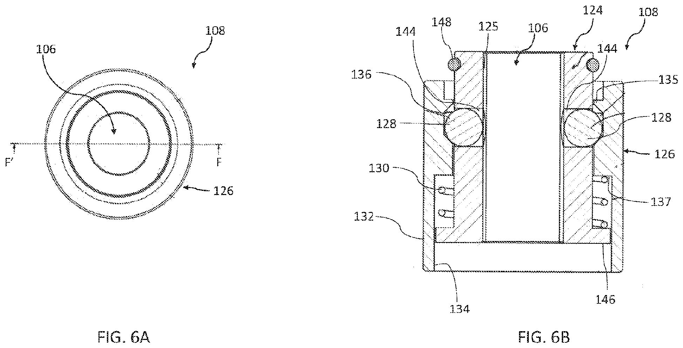

Referring to FIGS. 2A, 2B, 6A, 6B, 7A and 7B, the ejection member 108 includes a barrel 124, a sleeve 126, at least one locking member 128 and a biasing member 130. In the illustrated example, the at least one locking member 128 embodies two steel ball bearings. In the illustrated example, the ejection member 108 includes two locking members 128. Alternatively, the ejection member 108 may include one or more than one locking member 128, without limiting the scope of the invention.

The barrel 124 is cylindrical in shape and is coaxially aligned with the pilot drill 106. The barrel 124 includes a central through bore 125 along its length. The diameter of the central through bore 125 is enough to allow the pilot drill 106 to extend through the central through bore 125. The barrel 124 is movable along the longitudinal axis of the pilot drill 106. The sleeve 126 is coaxially aligned with the barrel 124. The sleeve 126 includes an outer surface 132 and an inner surface 134. The barrel 124 is disposed between the inner surface 134 of the sleeve 126 and the pilot drill 106. The sleeve 126 and the barrel 124 slide along the pilot drill 106 as a single unit. Further, the sleeve 126 and the barrel 124 are configured to slide with respect to one another. The barrel 124 includes at least one lock receiving hole member 144 corresponding to the at least one locking member 128. The lock receiving hole member 144 extends from an outer surface towards a center of the barrel 124. The at least one locking member 128 is fitted inside the at least one lock receiving hole member 144 and is free to travel with the at least one lock receiving hole member 144. In the illustrated example, the barrel 124 includes two lock receiving hole members 144 corresponding to the two locking members 128. The barrel 124 includes a flange 146 which extends towards the inner surface 134 of the sleeve 126 from the barrel 124. The ejection member 108 includes a stop ring 148 fixedly mounted to the barrel 124 to restrict the movement of the barrel 124 with respect to the sleeve 126.

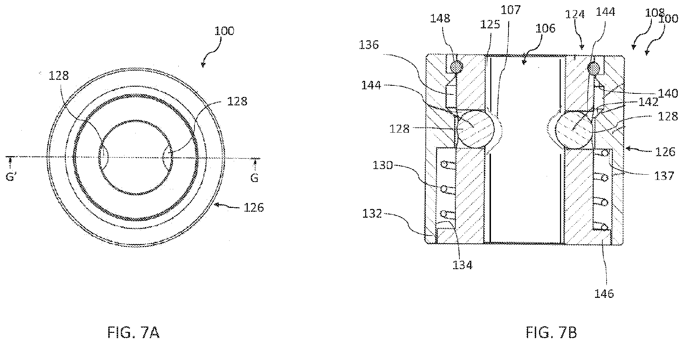

The sleeve 126 surrounds the barrel 124. The sleeve 126 is moved between a first position (engaged position) and a second position (disengaged position). The sleeve 126 is biased to force the locking members 128 towards the center of the lock receiving hole members 144 to engage the lock receiving groove member 107 of the pilot drill 106. The sleeve 126 includes a first step 135, a second step 137 and a space 136 (hereinafter alternatively referred to as annular chamber 136) in the form of an inner annular groove. The first step 135 and the second step 137 of the sleeve 126 extends inwards from the sleeve 126 towards the barrel 124. The first step 135 is configured to engage the stop ring 148 of the barrel 124 to restrict the downward movement of the barrel 124 with respect to the sleeve 126. The space 136 is defined between the first step 135 and the second step 137. The space 136 includes a front side face 140 and rear side face 142(shown in FIG. 7B). The front side face 140 is inclined so as to converge forward and extends so as to be contiguous with the inner surface 134 of the sleeve 126. The rear side face 142 is inclined so as to converge rearward and extends so as to be contiguous with the inner surface 134 of the sleeve 126. In the first position (as shown in FIG. 2B) the second step 137 abuts the at least one locking member 128 moving it down into the at least one lock receiving hole member 144 towards the lock receiving groove member 107 and into engagement with the pilot drill 106. In second position the at least one locking member is free to move away from the lock receiving groove member 107 and travel up the at least one lock receiving hole member 144 away from lock receiving groove member 107 of the pilot drill 106 and into the space 136 of the barrel 124. The space 136 is configured to receive the at least one locking member 128 in a second position.

In the illustrated example, the biasing member 130 embodies a compression coil spring. The biasing member 130 is disposed between the barrel 124 and the sleeve 126. More particularly, the biasing member 130 is anchored between the flange 146 the barrel 124 and the second step 137 of the sleeve 126. The biasing member 130 provides required biasing force between the sleeve 126 and the barrel 124.

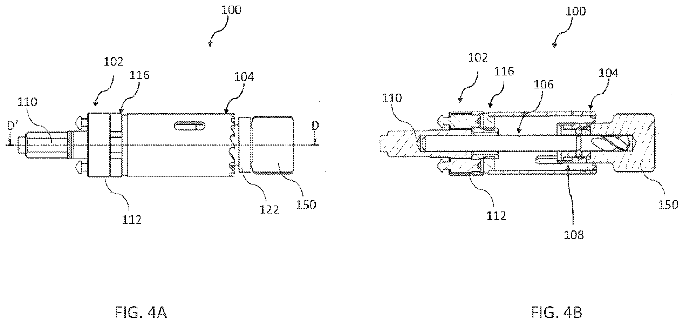

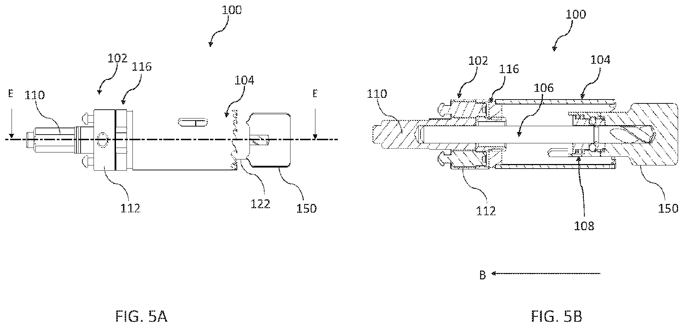

During operation, when a hole is bored by the hole saw assembly 100, the plug 122 formed, gets struck within the hole saw cup 114 (as shown in FIGS. 2A and 2B). To remove the plug 122 the hole saw 104 is disengaged from the arbor 102. The hole saw 104 along with the ejection member 108 is slid towards the front end of the pilot drill 106 in the front direction F (as shown in FIG. 2B). The second step 137 of the sleeve 126 biases the locking members 128 disposed with the space 136 of the sleeve 126 and the lock receiving hole members 144 of the barrel 124 to move into the lock receiving groove member 107 of the pilot drill 106, thereby locking the ejection member 108 in a first position (shown in a FIG. 7A and 7B). The plug 122 is then removed, thereafter a reset key 150 or fingers of the operator are used to push the sleeve 126 against the biasing force of the biasing member 130 disposed between the sleeve 126 and the barrel 124 (shown in FIGS. 4A, 4B, 5A and 5B). This dislodges the locking members 128 from the lock receiving groove member 107 of the pilot drill 106, thereby sliding the ejection member 108 towards the mounting end 111 of the pilot drill 106 in the rearward direction B (shown in FIG. 5B).

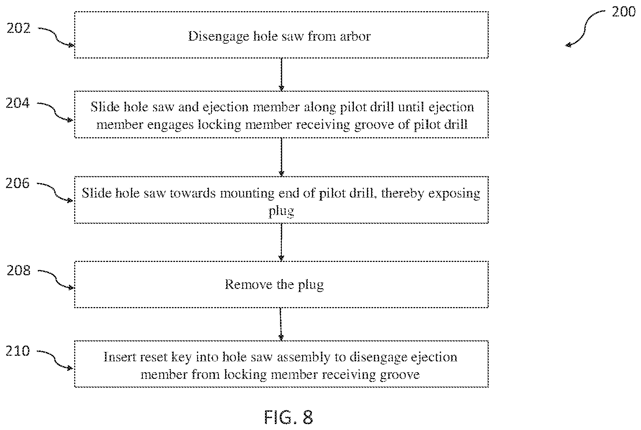

Referring to FIG. 8 a flow chart of a method 200 to remove the plug 122 formed during the cutting operation of the hole by the hole saw assembly is illustrated. At step 202, the hole saw 104 is disengaged from the arbor 102. More particularly, the plurality of pins 120 provided on the boss 116 of the hole saw 104 are disengaged with the plurality of apertures 114 provided on the annulus 112 of the arbor 102, thereby allowing the hole saw 104 to slide along the pilot drill 106.

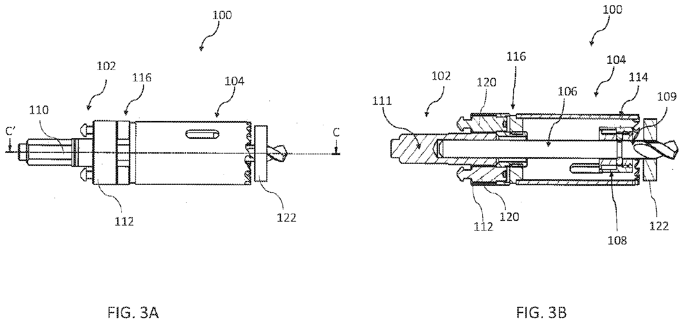

At step 204, the hole saw 104 along with ejection member 108 is slid (guided) along the pilot drill 106 towards a front end of the pilot drill 106 until the ejection member 108 engages the lock receiving groove member 107 More particularly, as the ejection member 108 moves along with the hole saw 104, the sleeve 126 is moved towards a first position, wherein the second step 137 of the sleeve 126 abuts the at least one locking member 128 moving it down into the at least one lock receiving hole member 144 towards the lock receiving groove member 107 and into engagement with the pilot drill 106 (shown in FIGS. 3A and 3B).

At step 206, the hole saw 104 is slid towards the mounting end 111 of the pilot drill 106, thereby exposing the plug 122 (shown in FIGS. 3A and 3B). At step 208, the plug 122 formed during the cutting operation is removed. At step 210, a reset key 150 is inserted into the hole saw assembly 100 to disengage the ejection member 108 from the lock receiving groove member 107 of the pilot drill 106 (shown in FIGS. 4A, 4B, 5A and 5B). More particularly, the sleeve 126 is moved towards a second position. In second position the at least one locking member is free to move away from the lock receiving groove member 107 and travel up the at least one lock receiving hole member 144 away from lock receiving groove member 107 of the pilot drill 106 and into the space 136 of the barrel 124, thereby disengaging the ejection member 108. Fingers of an operator may also be used instead of a reset key 150 to disengage the ejection member 108 from the lock receiving groove member 107, without limiting the scope of the invention. The method 200 enables removal of the plug 122 formed during the cutting process by implementing the steps of the method 200. With such an implementation, the wedged and struck plugs within the hole saw cup 114 of the hole saw 104 are adequately cleared.

The hole saw assembly 100 and the method 200 disclosed above, provides efficient removal of the plug 122 formed during the cutting operation of the material, from the hole saw 104. The ejection member 108 of the hole saw assembly 100 provides an efficient and cost-effective solution for removal the unwanted plugs such as the plug 122 formed during the cutting operation.

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, to thereby enable others skilled in the art to best utilize the present invention and various embodiments with various modifications as are suited to the particular use contemplated.

## Claims

1. A hole saw assembly (100) comprising:
an arbor (102), the arbor (102) comprises an arbor shaft (110), and an annulus (112) having a plurality of apertures;
a hole saw (104) removably coupled to the arbor (102);
a pilot drill (106) removably coupled to the arbor (102), the pilot drill (106) having a lock receiving groove member (107), wherein the pilot drill (106) is coaxial with the hole saw (104), and extends through and beyond the hole saw (104); and
an ejection member (108) configured to slide along the pilot drill (106), the ejection member (108) having,
a biasing member (130),
a barrel (124) coaxially aligned with the pilot drill (106),
a sleeve (126) coaxially aligned with the barrel (124), the barrel (124) and the sleeve (126) are configured to axially slide along the pilot drill (106), and
at least one locking member (128), wherein the at least one locking member (128) is configured to engage with the lock receiving groove member (107) to restrict the slidable movement of the barrel (124) and the sleeve (126) with respect to the pilot drill (106).

2. The hole saw assembly (100) according to claim 1, wherein the hole saw (104) comprises a boss (116), and a hole saw cup (114) having a plurality of cutting teeth, and wherein the boss (116) comprises a plurality of pins (120), wherein the plurality of pins (120) are configured to engage the apertures of the annulus (112), thereby coupling the hole saw (104) and the arbor (102).

3. The hole saw assembly (100) according to claim 1, wherein the ejection member (108) comprises two locking members (128), wherein each locking member of the two locking members (128) is a steel ball bearing.

4. The hole saw assembly (100) according to claim 1, wherein the sleeve (126) comprises a first step (135), a second step (137) and a space (136), wherein the space (136) is defined between the first step (135) and the second step (137) and is configured to receive the at least one locking member (128) during operation.

5. The hole saw assembly (100) according to claim 1, wherein the barrel (124) comprises a flange (146) extending towards the sleeve (126), a central through bore (125) and at least one lock receiving hole member (144), wherein the at least one locking member (128) is fitted inside the at least one lock receiving hole member (144) and is free to travel in the at least one lock receiving hole member (144).

6. The hole saw assembly (100) according to claim 3 and 5, wherein the barrel (124) comprises two lock receiving hole members (144) positioned radially 180 degrees apart.

7. The hole saw assembly (100) according to claims 4 and 5, wherein the sleeve (126) is configured to move between:
a first position, wherein in the first position, the second step (137) abuts the at least one locking member (128) moving it down the at least one lock receiving hole member (144) towards the lock receiving groove member (107) and into engagement with the lock receiving groove member (107) of the pilot drill (106); and
a second position, wherein in the second position, the at least one locking member (128) is free to move away from the lock receiving groove member (107) and travel up the at least one lock receiving hole member (144) and into the space defined by the barrel (124).

8. The hole saw assembly (100) according to claims 4 and 5, wherein the biasing member (130) is disposed between the flange (146) and the second step (137).

9. The hole saw assembly (100) according to claim 1, wherein the ejection member (108) comprises a stop ring (148) fixedly mounted on the barrel (124), wherein the stop ring (148) restricts the movement of the barrel (124) with respect to the sleeve (126).

10. The hole saw assembly (100) according to claim 1, wherein the sleeve (126) is biased to force the at least one locking member (128) towards a center of the barrel (124) to engage the lock receiving groove member (107) of the pilot drill (106).

11. The hole saw assembly (100) according to claim 1, wherein the pilot drill (106), the hole saw (104), the arbor (102) and the ejection member (108) are coaxially aligned.

12. A method for removing a plug formed during cutting operation of a hole by a hole saw assembly (100) according to claim 1, the method comprising:
disengaging a hole saw (104) from an arbor (102);
sliding the hole saw (104) and an ejection member (108) along a pilot drill (106) until the ejection member (108) engages a lock receiving groove member (107) of the pilot drill (106);
sliding the hole saw (104) towards a mounting end of the pilot drill (106) thereby exposing a plug (122);
removing the plug (122); and
inserting a reset key (150) to disengage the ejection member (108) from the lock receiving groove member (107) of the pilot drill (106).

## Patentansprüche

1. Eine Lochsägenanordnung (100), bestehend aus:
einer Spindel (102), wobei die Spindel (102) eine Wellenschaft (110) und einen Ringraum (112) mit einer Vielzahl von Öffnungen umfasst;
einer Lochsäge (104), die abnehmbar mit der Spindel (102) verbunden ist;
einem Führungsbohrer (106), der lösbar mit der Spindel (102) verbunden ist, wobei der Führungsbohrer (106) ein Verriegelungsaufnahmerillenelement (107) aufweist, wobei der Führungsbohrer (106) koaxial zur Lochsäge (104) ist und sich durch die Lochsäge (104) hindurch und über diese hinaus erstreckt; und
einem Auswurfelement (108), das so konfiguriert ist, dass es entlang des Führungsbohrers (106) gleitet, wobei das Auswurfelement (108) Folgendes aufweist:
ein Vorspannelement (130),
einen Zylinder (124), der koaxial zum Führungsbohrer (106) ausgerichtet ist,
eine Hülse (126), die koaxial zum Zylinder (124) ausgerichtet ist, wobei der Zylinder (124) und die Hülse (126) so konfiguriert sind, dass sie axial entlang des Führungsbohrers (106) gleiten können, und
mindestens ein Verriegelungselement (128), wobei das mindestens eine Verriegelungselement (128) so konfiguriert ist, dass es mit dem Verriegelungsaufnahmerillenelement (107) in Eingriff kommt, um die Gleitbewegung des Zylinders (124) und der Hülse (126) in Bezug auf den Führungsbohrer (106) zu begrenzen.

2. Die Lochsägenanordnung (100) gemäß Anspruch 1, wobei die Lochsäge (104) einen Aufnahmeteller (116), und ein Sägeblatt (114) mit einer Vielzahl von Schneidezähnen umfasst, und wobei der Aufnahmeteller (116) eine Vielzahl von Stiften (120) umfasst, wobei die Vielzahl von Stiften (120) so konfiguriert ist, dass sie in die Öffnungen des Ringraums (112) eingreifen, wodurch die Lochsäge (104) und die Spindel (102) miteinander verbunden werden.

3. Die Lochsägenanordnung (100) gemäß Anspruch 1, wobei das Auswurfelement (108) zwei Verriegelungselemente (128) umfasst, wobei jedes der beiden Verriegelungselemente (128) ein Stahlkugellager ist.

4. Die Lochsägenanordnung (100) gemäß Anspruch 1, wobei die Hülse (126) einen ersten Absatz (135), einen zweiten Absatz (137) und einen Zwischenraum (136) aufweist, wobei der Zwischenraum (136) zwischen dem ersten Absatz (135) und dem zweiten Absatz (137) definiert und so konfiguriert ist, dass er während des Betriebs das mindestens ein Verriegelungselement (128) aufnimmt.

5. Die Lochsägenanordnung (100) nach Anspruch 1, wobei der Zylinder (124) einen sich in Richtung der Hülse (126) erstreckenden Flansch (146), eine zentrale Durchgangsbohrung (125) und mindestens ein Verriegelungsaufnahmelochelement (144) umfasst, wobei das mindestens eine Verriegelungselement (128) in das mindestens eine Verriegelungsaufnahmelochelement (144) eingepasst ist und sich frei in dem mindestens einen Verriegelungsaufnahmebohrungselement (144) bewegen kann.

6. Die Lochsägenanordnung (100) nach Anspruch 3 und 5, wobei der Zylinder (124) zwei Verriegelungsaufnahmelochelement (144) umfasst, die radial um 180 Grad voneinander beabstandet sind.

7. Die Lochsägenanordnung (100) gemäß den Ansprüchen 4 und 5, wobei die Hülse (126) so konfiguriert ist, dass sie sich zwischen folgenden Positionen bewegt:
eine erste Position, in der in der ersten Position der zweite Absatz (137) an dem mindestens einen Verriegelungselement (128) anliegt und es entlang des mindestens einen Verriegelungsaufnahmelochelements (144) in Richtung des Verriegelungsaufnahmerillenelements (107) und in Eingriff mit dem Verriegelungsaufnahmerillenelement (107) des Führungsbohrers (106) bewegt; und
eine zweite Position, in der sich das mindestens eine Verriegelungselement (128) frei von dem Verriegelungsaufnahmerillenelement (107) wegbewegen und das mindestens eine Verriegelungsaufnahmelochelement (144) hinauf und in den durch den Zylinder (124) definierten Zwischenraum bewegen kann.

8. Die Lochsägenanordnung (100) gemäß den Ansprüchen 4 und 5, wobei das Vorspannelement (130) zwischen dem Flansch (146) und dem zweiten Absatz (137) angeordnet ist.

9. Die Lochsägenanordnung (100) nach Anspruch 1, wobei das Auswurfelement (108) einen Anschlagring (148) umfasst, der fest am Zylinder (124) angebracht ist, wobei der Anschlagring (148) die Bewegung des Zylinders (124) in Bezug auf die Hülsen (126) begrenzt.

10. Die Lochsägenanordnung (100) gemäß Anspruch 1, wobei die Hülse (126) vorgespannt ist, um das mindestens eine Verriegelungselement (128) in Richtung einer Mitte des Zylinders (124) zu drücken, um in das Verriegelungsaufnahmerillenelement (107) des Führungsbohrers (106) einzugreifen.

11. Die Lochsägenanordnung (100) nach Anspruch 1, wobei der Führungsbohrer (106), die Lochsäge (104), die Spindel (102) und das Auswurfelement (108) koaxial ausgerichtet sind.

12. Verfahren zum Entfernen eines beim Schneiden eines Lochs mit einer Lochsägenanordnung (100) gemäß Anspruch 1 gebildeten Stopfens, wobei das Verfahren umfasst:
das Lösen einer Lochsäge (104) von einer Spindel (102);
das Gleiten der Lochsäge (104) und eines Auswurfelements (108) entlang eines Führungsbohrers (106), bis das Auswurfelement (108) in ein Verriegelungsaufnahmerillenelement (107) des Führungsbohrers (106) eingreift;
das Schieben der Lochsäge (104) in Richtung eines Befestigungsendes des Führungsbohrers (106), wodurch ein Stopfen (122) freigelegt wird;
das Entfernen des Stopfens (122); und
das Einführen eines Rückstellschlüssels (150), um das Auswurfelement (108) aus dem Verriegelungsaufnahmerillenelement (107) des Führungsbohrers (106) zu lösen.

## Revendications

1. Un ensemble de scie-cloche (100) comprenant :
un arbre porte-scie (102), l'arbre (102) comprenant un arbre (110), et un anneau (112) comportant une pluralité d'orifices ;
une scie-cloche (104) couplée de manière amovible à l'arbre (102) ;
un foret pilote (106) couplé de manière amovible à l'arbre (102), le foret pilote (106) ayant un élément de gorge de réception de verrou (107), le foret pilote (106) étant coaxial avec la scie-cloche (104) et s'étendant à travers et au-delà de la scie-cloche (104) ; et
un élément d'éjection (108) configuré pour coulisser le long du foret pilote (106), l'élément d'éjection (108) comprenant,
un élément de rappel (130),
un corps (124) aligné coaxialement avec le foret pilote (106),
une douille (126) alignée coaxialement avec le corps (124), le corps (124) et la douille (126) étant configurés pour coulisser axialement le long du foret pilote (106), et
au moins un élément de verrouillage (128), l'au moins un élément de verrouillage (128) étant configuré pour s'engager avec l'élément de gorge de réception de verrou (107) afin de restreindre le mouvement coulissant du corps (124) et de la douille (126) par rapport au foret pilote (106).

2. L'ensemble de scie-cloche (100) selon la revendication 1, dans lequel la scie-cloche (104) comprend un moyeu (116) et une couronne de scie (114) comportant une pluralité de dents de coupe, et dans lequel le moyeu (116) comprend une pluralité de goujons (120), la pluralité de goujons (120) étant configurée pour s'engager dans les orifices de l'anneau (112), couplant ainsi la scie-cloche (104) et l'arbre (102).

3. L'ensemble de scie-cloche (100) selon la revendication 1, dans lequel l'élément d'éjection (108) comprend deux éléments de verrouillage (128), chaque élément des deux éléments de verrouillage (128) étant une bille en acier.

4. L'ensemble de scie-cloche (100) selon la revendication 1, dans lequel la douille (126) comprend une première marche (135), une seconde marche (137) et un espace (136), l'espace (136) étant défini entre la première marche (135) et la seconde marche (137) et étant configuré pour recevoir l'au moins un élément de verrouillage (128) pendant le fonctionnement.

5. L'ensemble de scie-cloche (100) selon la revendication 1, dans lequel le corps (124) comprend une bride (146) s'étendant vers la douille (126), un alésage traversant central (125) et au moins un élément de trou de réception de verrou (144), l'au moins un élément de verrouillage (128) étant logé à l'intérieur de l'au moins un élément de trou de réception de verrou (144) et étant libre de se déplacer dans l'au moins un élément de trou de réception de verrou (144).

6. L'ensemble de scie-cloche (100) selon les revendications 3 et 5, dans lequel le corps (124) comprend deux éléments de trou de réception de verrou (144) positionnés radialement à 180 degrés l'un de l'autre.

7. L'ensemble de scie-cloche (100) selon les revendications 4 et 5, dans lequel la douille (126) est configurée pour se déplacer entre :
une première position, dans laquelle, dans la première position, la seconde marche (137) vient en butée contre l'au moins un élément de verrouillage (128) le déplaçant vers le bas de l'au moins un élément de trou de réception de verrou (144) en direction de l'élément de gorge de réception de verrou (107) et en engagement avec l'élément de gorge de réception de verrou (107) du foret pilote (106) ; et
une seconde position, dans laquelle, dans la seconde position, l'au moins un élément de verrouillage (128) est libre de s'éloigner de l'élément de gorge de réception de verrou (107) et de se déplacer vers le haut de l'au moins un élément de trou de réception de verrou (144) et dans l'espace défini par le corps (124).

8. L'ensemble de scie-cloche (100) selon les revendications 4 et 5, dans lequel l'élément de rappel (130) est disposé entre la bride (146) et la seconde marche (137).

9. L'ensemble de scie-cloche (100) selon la revendication 1, dans lequel l'élément d'éjection (108) comprend une bague d'arrêt (148) montée de manière fixe sur le corps (124), la bague d'arrêt (148) limitant le mouvement du corps (124) par rapport à la douille (126).

10. L'ensemble de scie-cloche (100) selon la revendication 1, dans lequel la douille (126) est sollicitée de manière à pousser l'au moins un élément de verrouillage (128) vers le centre du corps (124) pour engager l'élément de gorge de réception de verrou (107) du foret pilote (106).

11. L'ensemble de scie-cloche (100) selon la revendication 1, dans lequel le foret pilote (106), la scie-cloche (104), l'arbre (102) et l'élément d'éjection (108) sont alignés coaxialement.

12. Un procédé de retrait d'un carottage formé lors de l'opération de coupe d'un trou par un ensemble de scie-cloche (100) selon la revendication 1, le procédé comprenant :
désaccoupler une scie-cloche (104) d'un arbre (102) ;
faire coulisser la scie-cloche (104) et un élément d'éjection (108) le long d'un foret pilote (106) jusqu'à ce que l'élément d'éjection (108) engage un élément de gorge de réception de verrou (107) du foret pilote (106) ;
faire coulisser la scie-cloche (104) vers une extrémité de montage du foret pilote (106) exposant ainsi un carottage (122) ;
retirer le carottage (122) ; et
insérer une clé de réinitialisation (150) pour désengager l'élément d'éjection (108) de l'élément de gorge de réception de verrou (107) du foret pilote (106).
